(19) Europäisches Patentamt
European Patent Office
Office européen des brevets

(11) **EP 3 326 411 B1**

(12) **EUROPEAN PATENT SPECIFICATION**

(45) Date of publication and mention
of the grant of the patent:
**04.09.2019 Bulletin 2019/36**

(51) Int Cl.:
***H04W 52/34*** *(2009.01)*      ***H04W 52/14*** *(2009.01)*
***H04W 52/36*** *(2009.01)*      ***H04W 52/40*** *(2009.01)*

(21) Application number: **15744703.8**

(22) Date of filing: **22.07.2015**

(86) International application number:
**PCT/IB2015/055564**

(87) International publication number:
**WO 2017/013471 (26.01.2017 Gazette 2017/04)**

(54) **INTER-CELL POWER COORDINATION FOR ENERGY EFFICIENT CELLULAR NETWORK**

LEISTUNGSKOORDINATION ZWISCHEN ZELLEN FÜR ENERGIEEFFIZIENTES MOBILFUNKNETZ

COORDINATION DE PUISSANCE ENTRE CELLULES POUR UN RÉSEAU CELLULAIRE À CONSERVATION D'ÉNERGIE OPTIMALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.05.2018 Bulletin 2018/22**

(73) Proprietor: **Telefonaktiebolaget LM Ericsson (publ)**
**164 83 Stockholm (SE)**

(72) Inventors:
• **BONTU, Chandra Sekhar**
  **Nepean, Ontario K2J 5G8 (CA)**
• **GEORGE, Mercy**
  **Kanata, Ontario K2T 0E8 (CA)**
• **MANN, Karl David**
  **Ottawa, Ontario K2J 3C4 (CA)**

(74) Representative: **Ericsson**
**Patent Development**
**Torshamnsgatan 21-23**
**164 80 Stockholm (SE)**

(56) References cited:
**WO-A1-2011/100673**      **WO-A1-2013/192356**
**US-A1- 2015 093 996**

**Description**

TECHNICAL FIELD

A method and system for power coordination for energy efficiency in a wireless communication network.

BACKGROUND

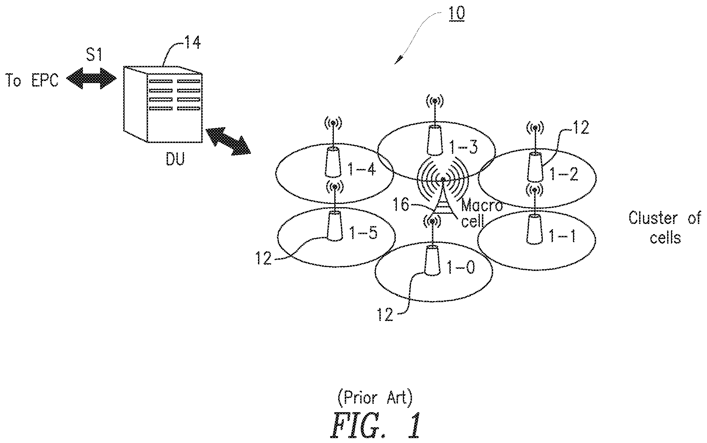

Future cellular and wireless communication network deployments are envisioned to be deployed in clusters with a large number of macro cells and small cells distributed within a geographical region with overlapping coverage to achieve higher capacity and coverage. FIG. 1 illustrates one such clustered deployment 10 of a plurality of cells 1-0 through 1-5, each cell served by at least one radio unit 12. There are many advantages associated with the cluster deployment of small cells: uniform coverage within the geographical area, improving a wireless device's battery power efficiency, increased network capacity, etc. In a clustered deployment, a digital unit (DU) 14 that includes baseband circuitry is connected to the radio units 12 at different locations within the geographical area, typically using a cable. This type of cluster deployment is useful to contain the energy usage of the cellular network. The DU 14 is connected upstream to a wireless infrastructure such as an evolved packet core (EPC).

In an example deployment scenario, as illustrated in FIG.1, multiple small cells may be deployed within the coverage of a macro cell served by a macro cell base station 16. The small cells 1-1 through 1-5 are deployed to offload some of the data traffic from the macro cell (as is done with Wi-Fi offloading of the cellular data traffic). However when there is not much data traffic, the small cells are under-utilized, and consequently, network resources are wasted.

In a typical cellular base station, a significant portion of the energy (~50-80%) is consumed in the power amplification process to reach distant terminals or base station radio units with high path losses. Also, the transmitter circuitry of a base station consumes more power than the receiver circuitry.

Further, power amplification has a rather poor efficiency, defined as the ratio of output power to the input power consumed in the amplification process, typically reaching up to 50 percent for maximum load, but degrading to much lower values in medium and low load situations. This is a major reason why the power consumption in cellular networks is, to a large extent, independent of the traffic load.

In an approximate linear model, the power consumed or spent, Pin, for an output power of Pout can be represented by a linear model as follows:

$$Pin = A*Pout + B$$

where A and B are constants that are dependent on the type of power amplifier, e.g., class A, B, C, E etc. Basically, these constants define the power efficiency of the amplifier. From this approximate model, it is clear that even when Pout is reduced to a low value based on the traffic load, the energy savings may not be significant. In particular, at zero output power, a base station still consumes a non-negligible fraction of the maximum input power. The DC power consumption of a typical 3-sector site at zero traffic load is still 50 percent of the peak power.

Poor power efficiency is a major reason why the power consumption in cellular networks is, to a large extent, independent of the traffic load. For this reason, in addition to the application of advanced power amplifiers, new power management concepts are desired. Introducing scalability of hardware components, and supporting them by dynamic power management, may enable the adaptation of energy consumption to actual performance requirements. Further, power savings are facilitated by the deactivation of components in time periods of no operation. With existing power amplifier technology, power savings may be achieved by reducing the power or turning off some of the components in a base station. Normally, this is done by manually configuring specific times in a day to power down or power up specified components in a small cell, but such methods are complex and may lead to unwanted service non-availability and interruptions.

Prior art can be found, for example, in WO 2011/100673 A1, which generally relates to a method and an apparatus for enhancing cell-edge user performance and signaling radio link failure conditions via downlink cooperative component carriers, US 2015/0093996 A1, which generally relates to a method and an apparatus for heterogeneous small cells self-organization in LTE networks based on Internet protocol multimedia subsystems, and WO 2013/192356 A1, which generally relates to a method and an apparatus for energy savings and interference reduction in a wireless communications network.

SUMMARY

The invention is defined by the appended independent claims. Dependent claims constitute embodiments of the invention. Any other subject-matter outside the scope of the claims is to be regarded as an example not in accordance with the invention.

BRIEF DESCRIPTION OF THE DRAWINGS

A more complete understanding of the embodiments described herein, and the attendant advantages and features thereof, will be more readily understood by reference to the following detailed description when considered in conjunction with the accompanying drawings wherein:

FIG. 1 is a diagram of a known cell cluster;
FIG. 2 is a graph of powering up and down steps for controlling a transmitter of a radio unit;
FIG. 3 is a block diagram of radio units in communication with a digital unit when some radio unit transmitters are powered down;
FIG. 4 is a diagram of a cell cluster with one cell radio unit transmitter powered down;
FIG. 5 is a diagram of a cell cluster with one cell radio unit transmitter powered down with application of a coordinated multipoint (CoMP) process;
FIG. 6 is a block diagram of a control unit constructed in accordance with principles described herein;
FIG. 7 is an alternative block diagram of a control unit constructed in accordance with principles described herein;
FIG. 8 is a block diagram of a radio unit constructed in accordance with principles described herein;
FIG. 9 is a flowchart of an exemplary process for power conservation in a cluster of cells; and
FIG. 10 is a flowchart of an exemplary process for power conservation in a cluster of cells.

DETAILED DESCRIPTION

Before describing in detail exemplary embodiments that are in accordance with the present disclosure, it is noted that the embodiments reside primarily in combinations of apparatus components and processing steps related to conservation of power in a cell cluster. Accordingly, the system and method components have been represented where appropriate by conventional symbols in the drawings, showing only those specific details that are pertinent to understanding the embodiments of the present disclosure so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements. Further, the term wireless device may include a user equipment (UE), mobile phone, laptop computer, iPad, or other mobile device capable of wireless communication.

Based on use of a first cell's resources, the transmitter of the first cell's radio unit (RU) may be completely turned off by reducing the transmit power over a period of time, for example incrementally, and handing off wireless devices attached to the first cell to a nearby cell. Optionally, transmit power of the nearby cell's radio unit may be turned up to better reach the wireless devices attached to the first cell. The receiver of the first cell's radio unit continues listening to the uplink (UL) transmission, i.e., transmission from wireless device to cell radio unit, from the wireless devices of the first cell. The radio unit of the nearby cell may instruct a wireless device of the first cell to adjust its UL transmit power to conserve the wireless device's battery.

According to methods described herein, cells in a dense heterogeneous deployment can be partially turned off or turned on with minimal coordination among the cells. Transmitters of the cells may be turned off completely to obtain the maximum energy savings. The receivers of the "inactive" cells - those cells whose radio transmitters have been stepped down in power - can still assist to improve the UL coverage and capacity, e.g., by providing coordinated multipoint (CoMP) assistance. Further, when there is a need to support excessive incoming traffic, the inactive cells can turn on their transmitter automatically by detecting the UL signals transmitted by the incoming wireless devices.

As mentioned above, small cells are typically deployed within a coverage area to increase system capacity. In such cases, coverage of different cells can overlap. When a base station does not need extra capacity, the small cells may not be used for extra coverage or capacity. In such situations the lightly loaded cells may be turned off. A cluster of cells can be deployed as follows. When the system load of a small cell is detected to be low for extended duration, the transmitter part of the small cell can be turned off by stepping down its transmit power, which causes all of the wireless devices associated with the small cell to perform a handover (HO) to one of the nearby cells, or to the base station of the macro cell. Thus, although the small cell's transmitter is being powered down, the wireless devices associated with the small cell do not have their calls or communication sessions dropped. Rather, graceful HO is accomplished.

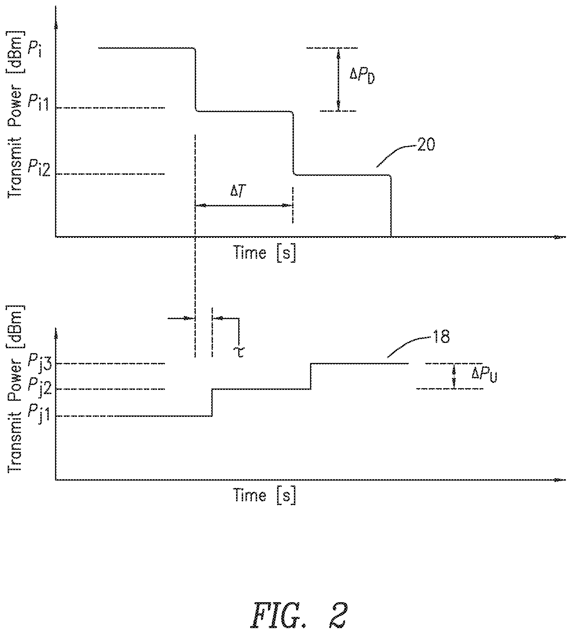

The radio unit serving a small cell may turn off its transmit power amplifier completely in steps over a time. The target radio unit serving the macro cell or small cells other than the small cell whose transmitter is being powered down may optionally increase their transmitter transmit power in steps up to a maximum limit. FIG. 2 illustrates incremental transmit power ramp-up 18 and incremental transmit power ramp down 20 at the cells. The ramping up/down of transmitter power is used so that idle mode/active mode behavior of the wireless device is relatively stable across the network. Specifically, the time $\Delta T$ and step size $\Delta P$ are configured such that the wireless device and the network have enough time to perform HO or cell selection/reselection without causing unwanted dropped calls. Specifically, $\Delta T$ and power ramp adjustment factor (step size) $\Delta P$ are dependent on the wireless devices actively communicating with the cell and wireless devices in idle mode camping on the cell. $\Delta T$ and power ramp adjustment factor $\Delta P$ are adjusted such that the time for ramping down power is enough for the cell to execute a graceful HO of wireless devices to neighbor cells. According to one example implementation, the power ramp adjustment factor $\Delta P$ may refer to the decrease in the average power of all the downlink transmission symbols across the bandwidth of operation from the cell. According to another variant, the power ramp adjustment factor $\Delta P$ may refer to the decrease in the average transmit power across all the cell specific reference symbols, i.e., the data symbols may not be powered down. In some example implementations, all the connected UEs report measurement results based on the received reference signals from the serving cell. If the measurement trigger is based on reference signal receive power (RSRP), reducing the reference signal power is enough to initiate the handovers.

The power ramp up or ramp down steps, $\Delta P\_U$ and $\Delta P\_D$ are decided based on the capabilities of the power amplifiers. There may be delay between the instants of power up and power down, as illustrated by T in FIG. 2. This delay may not be avoidable in some implementations but can be kept to a small value. Note that the powering off of a transmitter of a radio unit (RU) impacts all the downlink signals equally, i.e., reference signals, information bearing traffic, etc. However, the powering up of the average downlink (DL), i.e., transmission to the wireless device from the cell radio unit, power may not impact all of the downlink signals equally. For example, in one example, the transmit power of the resources assigned for certain wireless devices may be increased without impacting the transmit power of the DL reference symbol resources. The channel measurements performed by the wireless device are typically averaged across multiple sub frames to suppress interference noise further and so that the channel measurement accuracy will not be affected by not increasing the power of the reference symbols. However, for the wireless devices which are moving to a cell from the cell whose transmit power is being reduced and which are configured to decode quadrature amplitude modulation (QAM)16 or QAM64 or QAM256, radio resource control (RRC) signaling is sent to inform the wireless device of the change in the transmission power relative to the reference signal power. If the transmit power of the DL reference signals are also to be increased, then the time for each step preferably may be longer so that the channel estimation and channel quality information estimation at the wireless device are not adversely impacted.

In some example implementations, the small cell whose transmitter is being powered down does not turn off its receiver, but instead, keeps listening to the UL specific transmissions from the wireless devices even after the wireless devices are successfully handed over to the surrounding cells. Received signal quality metrics are collected from each cell by the base stations and are used to turn on the transmitter of the powered down cell if additional capacity is needed.

When the demand for radio resources at a cell exceeds a threshold, the base station or a network entity coordinating the cluster of cells may search for cells whose transmitters are turned off and essentially operating in the assist mode, i.e., receive-only mode. From uplink signals received from the radio units of the neighbor cells in the assist mode, appropriate cells are selected to turn on their transmitters to alleviate the load at the serving cell. One selection criterion to select an appropriate neighboring cell in assist mode is to count the number of serving cell's wireless devices the neighbor cell can listen to with acceptable receive quality. The receive quality can be assessed by decoding the uplink signals that are received from the radio units of the neighbor cell in assist mode. When the count of serving cell's wireless devices that can be supported by the neighbor cell, which is the measure of load at the neighbor cell, exceeds a predetermined threshold, the neighbor cell's transmitter may be turned on.

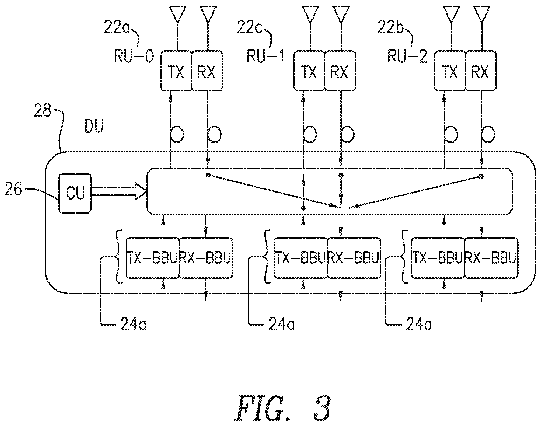

FIG. 3 is a block diagram of radio units 22 in communication with a digital unit 28 when some radio unit transmitters are powered down. As shown in FIG. 3, when the transmitters of the radio units RU-0 22a and RU-2 22b are powered down (radio units 22a-22c are referred to collectively herein as radio units 22), the received signals from the radio unit, RU-0 22a and RU-2 22b are routed to the serving cell's base band unit (BBU), BBU-1 24c for processing after a control unit (CU) 26 residing in the digital unit (DU) 28 makes the decision to turn off the transmit chains of RU-0 22a and RU-2 22b. Thus, the BBU-0 24a and BBU-2 24b are inactive when the transmitters of their respective radio units, 22a and 22b, are powered down (baseband 24a-24c are referred to collectively herein as baseband units 24). In contrast, the BBU-1 24c associated with the radio unit 22c receives uplink signals from the radio units RU0 22a and RU2 22b and receives and transmits from and to the radio unit 22c.

In some variants, the receivers of the radio units 22 whose transmitters are powered down may continue to operate continuously at full power or, in the alternative, are configured to operate in a sniffing mode only using very low power just to detect wireless device transmissions in the cell. In some variants, the radio units 22 operate in an asymmetric mode where a wireless device in a first cell served by a radio unit 22a whose transmitter has been turned off is listened to by the radio unit 22a, whereas the wireless device receives downlink transmissions from the fully active radio unit 22c. In this way, the wireless device may conserve power by not having to ramp up its uplink transmit power to reach the active radio unit 22c, since the first radio unit 22a is probably closer. In this case, only the downlink transmission is received from the cell of radio unit 22c. The uplink transmission from the wireless device is received by radio unit 22a and subsequently decoded at the cell of radio unit 22c. In another option, the uplink transmission from the wireless device is received by radio unit 22a and radio unit 22c and subsequently both the received signals are decoded in combination at the cell of radio unit 22c.

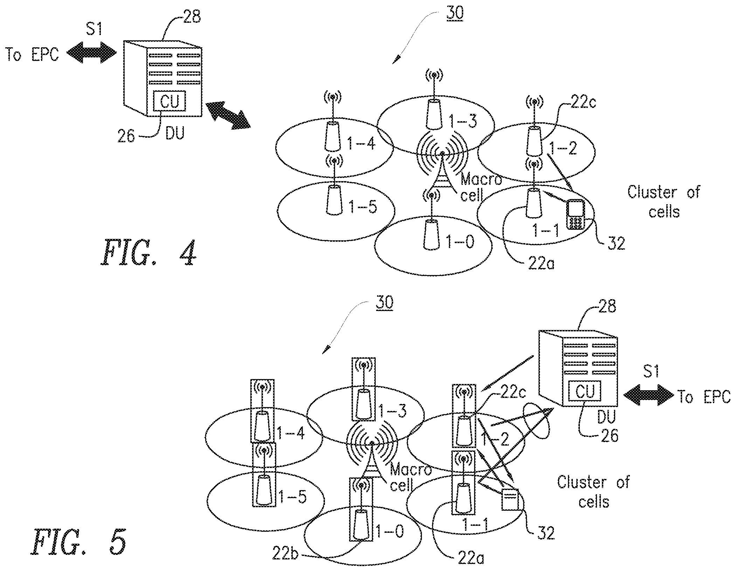

FIG. 4 is a diagram of a cluster of cells 30 in connection with the digital unit (DU) 28 and served by radio units 22, also referred to herein as radio base stations. The transmitter of the radio unit 22a of cell 1-1 is powered down but listens to a wireless device 32 in the cell 1-1. The wireless device 32 is handed over to the radio base station 22c of the nearby cell 1-2 which transmits to the wireless device 32 and receives from the wireless device 32. Control of which transmitters are powered down may be via the control unit (CU) 26 in the DU (28).

In the diagram of FIG. 5, the radio units 22a and 22c each receive uplink signals from the wireless device 32. These uplink signals may be coherently combined at the DU 28 in a coordinated multipoint (CoMP) process to obtain a macro diversity advantage at the radio unit 22c. For example, an uplink transmission from the wireless device 32, which was initially connected to the cell 1-1 via the radio unit 22a and subsequently handed over to cell 1-2 via the radio unit 22c because of the powering down of the transmitter of radio unit 22a, may be received from a receiver of the radio unit 22a and also possibly a receiver of the radio unit 22b. The transmit power of the wireless device 32 may be readjusted upon hand-over to reflect the change of the receive point. This decision is used to extend the battery of the wireless device 32.

Transmit power adjustment is explained as follows. Transmit power, $P_{t0}$, of the wireless device 32, before HO may be expressed as:

$$P_{t0} = P_{rCell0} + \alpha_{cell0} L_{cell0}$$

where $P_{rcell0}$ is the target received power per physical resource block (PRB) at the antenna port of cell 1-1 (RU 22a), also referred to herein as cell 0. $L_{cell0}$ is the path loss between the wireless device 32 and cell 0. The term $\alpha_{Cell0}$ is a scaling factor in the range [0,1], set by the radio unit 22a serving cell 0 as a fractional power control parameter.

Transmit power $P_{t1}$ of the wireless device 32, after HO may be expressed as:

$$P_{t1} = P_{rCell1} + \alpha_{cell1} L_{cell1} + \Delta$$

where:

$$\Delta = P_{rCell1} + \alpha_{cell1} L_{cell1} - min(P_{rCell1} + \alpha_{cell1} L_{cell1}, P_{rCell0} + \alpha_{cell0} L_{cell0})$$

and where $\alpha_{celli}$ is the fractional power control parameter for cell $i$, e.g., cell 1-2 (RU 22c). $P_{rCell1}$ is the target receive power at cell 1. The value of $\Delta$ can be computed at cell 1-0 with the knowledge of the average received power at cell 1-0 and also the fractional power control parameter at cell 1-0. Of note, the integers corresponding to $i$ in the above equations refers to cell "1-$i$" in FIGS. 4 and 5. Similarly, references to Cell0, Cell1, etc., refer to corresponding cell 1-0, cell 1-1, etc. in FIGS. 4 and 5. The "1-" has been omitted in the equations for the sake of clarity and to aid understanding. As shown in the equation for $\Delta$, if the wireless device 32 is closer to the radio unit of cell 1-0 than the radio unit of cell 1-1, then $P_{t0}$ is less than $P_{t1}$, when the target receiver power at the radio units of cell 1-1 and cell 1-0 are the same, i.e. $P_{rcell1} = P_{rCell0}$. After handing over the wireless device to cell 1-1, uplink signals can be received at the radio unit of cell 1-1 or can still be received at the radio unit of cell 1-0. In the latter case, the received signals at the radio unit of cell 1-0 can be forwarded to the baseband unit of cell 1-1 for further decoding. If the wireless device is close to cell 1-0, the wireless device needs less transmit power to meet the same received power criterion at the radio unit, thus conserving its battery power. In another example implementation, after handing-over the wireless device to cell 1-1, uplink signals can be received at the radio units of cell 1-1 and cell 1-0. In this case, the received signals at the radio units of cell 1-0 and cell 1-1 are forwarded to the baseband unit of cell 1-1 for further decoding. In this case, the quality of the received data is superior because of the combining gain. The target receive power at the radio unit can be reduced to further improve the battery life of the wireless device.

In accordance with some example implementations, the cells can be coordinated to determine which cells should have their transmitters powered down. An example of downlink power coordination among cells when turning off the transmitter of a cell is explained as follows. When the radio resource usage for user data transmission in cell *l* is below a threshold for an extended time, a metric is computed for the other active cells to evaluate the possibility of turning off cell *l*, as follows. For all wireless devices actively communicating with cell *l*, an expected downlink (DL) signal to interference plus noise ratio (SINR) is computed if they were connected to one of the best cells within the cluster:

$$\gamma_j = \max_i \left\{ \frac{P_T(i)L_j(i)}{\sum_{\substack{k=0 \\ k \neq \ell}}^{N_{Cell}-1} P_T(k)L_j(k) + \eta} \right\}$$

$$for\ i = 0,1,\dots,N_{cell} - 1\ (i \neq \ell)$$

$$for\ j = 0,1,\dots,N_{UE}(\ell) - 1$$

where $P_T(i)$ is the average transmit power of PDSCH RE or PRB of the cell -*i*; $L_j(i)$ is the path loss from the cell *i* to the wireless device *j*; and $\eta$ represents the power estimate of noise and other interference per resource element (RE) or PRB.

$L_j(i)$, the path loss of wireless device *j* with respect to cell *i*, for example, can be computed by the network by obtaining the reference signal receive power (RSRP) reported from the wireless device *j*:

$$L_j(i) = P_T(i) - RSRP_j(i)$$

where $RSRP_j(i)$ is the RSRP from wireless device *j* with respect to cell *i*. The estimated SINRs of the wireless devices communicating with a cell can be recomputed based on the specific transmit power level of the wireless device, keeping the average power level less than or equal to $P_T(i)$.

Similarly, the expected DL SINR improvement of the wireless devices actively communicating with the cells *i*, *i*=0,1,...,N_cell-1; *i*≠*l* are also computed. Of note, the integers corresponding to *i* in the above equations refers to cell "1-*i*", and the integers corresponding to *l* refer to cell "1-*l*" in FIGS. 4 and 5. The "1-" has been omitted in the equations for the sake of clarity and to aid understanding. The SINR improvement is due to the reduction in interference with the expected turning off of the transmitter of cell *l* (the dominant interference is due to the DL reference symbols transmitted by cell *l*). When all the wireless devices in cell *l* can find a new network node with acceptable performance and furthermore, network nodes have enough resources to support these wireless devices with the estimated SINR, the transmitter of cell *l* is turned off. However, the receiver of cell *l* monitors the UL transmissions from these wireless devices (UL transmissions towards their new serving cells) selectively. For example, the transmissions over physical random access channels (PRACH) by the wireless device 32 towards its new serving cells may be monitored by the receivers. Monitoring of these resources assigned for PRACH is performed based on the uplink resource configuration at the new serving cell. In addition to PRACH, uplink synchronization signals (SRS), and physical uplink control channels (PUCCH) may also be monitored. The resources that are monitored may be selected by a network entity or a base station responsible for the cluster coordination. The radio resources to monitor are typically selected to maximize the effectiveness of coordination and reducing the power consumption due to monitoring.

DL power coordination for selective activation of a transmitter of a cell for data offloading is explained as follows. When the radio resource usage for user data transmission in cell *l* is above a threshold for an extended time, a metric is computed for the other inactive cells to evaluate the possibility of turning on these inactive cells to offload the data traffic from cell *l*, as follows. For all the wireless devices actively communicating with cell *l*, the expected DL SINR is computed if they were connected to one of the best inactive cells within the cluster:

$$\gamma_j = \max_i \left\{ \frac{P_T(i)L_j(i)}{\sum_{\substack{k=0 \\ k \neq \ell}}^{N_{Cell}-1} P_T(k)L_j(k) + \eta} \right\}$$

$$for\ i = 0,1, \dots, N_{cell} - 1\ (i \neq \ell)$$

$$for\ j = 0,1, \dots, N_{UE}(\ell) - 1$$

where $P_T(i)$ is the average transmit power of the physical downlink shared channel (PDSCH) RE or PRB of the cell *l*; $L_j(i)$ is the path loss from the cell *i* to the wireless device *j*; and η represents the power estimate of noise and other interference per RE or PRB. In another variant, the best cell is the cell that can support the maximum number of a serving cell's wireless devices with acceptable signal quality. By turning on this one best cell, many UEs can be offloaded, i.e., to conserve the network energy power, so that a minimum number of cells are operating for a given system load.

$L_j(i)$, the path loss of wireless device *j* with respect to cell *i*, for example, can be computed by the network by obtaining the average received power from the wireless device *j* measured at the inactive cell *l*, $P_R(i)$:

$$L_j(i) = P_{Tj} - P_R(i)$$

where $P_{Tj}$ is the average receive power from wireless device *j* at cell *i*.

Similarly, the expected DL SINR degradation of the wireless devices actively communicating with the cell *l*, are also computed. The SINR degradation is due to the increase in interference level with the expected turning on of the transmitters of the inactive cells (the dominant interference is due to the DL reference symbols transmitted by cells). When some of the wireless devices in cell *l* can find a new network node with acceptable performance and when network nodes have enough resources to support the remaining wireless devices with the estimated SINR, the transmitters of the selected inactive cells are turned on. When turning on the transmitter, the system bandwidth may be decided based on the number of radio resources that are required to support the data offloading. In other words, partial system bandwidth can be turned on.

When the demand for radio resources is increased at the cells which are active, the transmitters of the inactive cells - which are the cells, whose transmitters are powered down - are instructed to be turned on. In some variants, where the receivers of the inactive cells detect increased activity in their respective coverage areas, the inactive cells may decide to turn on their transmitters, thereby becoming active cells. The increased activity can be detected by monitoring the UL specific reference transmissions such as, the random access channel (RACH), sounding reference signal (SRS) or physical uplink control channel (PUCCH) from the wireless devices which are connected to the neighboring active cells.

Alternatively, when the UL receive power from most of wireless devices is significantly greater at an inactive cell compared to the surrounding active cells, the control unit may decide to turn on the inactive cell. The control unit may further decide to turn off the transmitters of some of the active neighboring cells. When there are many wireless devices which are in the radio resource control (RRC) IDLE state transitioning to the RRC connected state, there will be RRC connected establishment procedures, including the transmission of the RACH. The inactive cells can detect the RACHs transmitted by these wireless devices and may decide to turn on their transmitters. The RACH configuration parameters are exchanged among the active cells and the inactive cells should be able to monitor the RACH resources configured by their active neighbor cells.

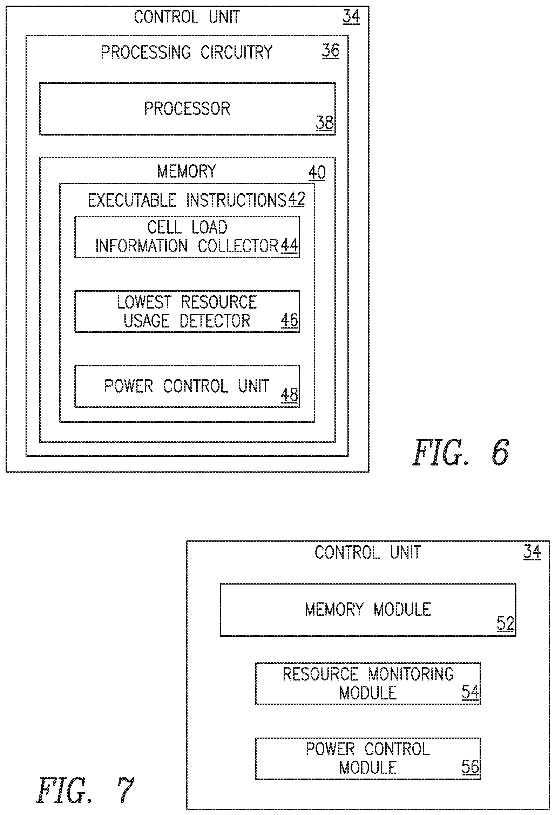

FIG. 6 is a block diagram of a control unit 34 configured to control power consumption of at least one radio unit such as a radio unit 22 serving a cell such as cell 1-1 (cell 0) or cell 1-2 (cell 1). In some variants, the control unit 34 may be within the DU 28 such as CU 26 or otherwise collocated with the DU 28. Placement of the control unit 34 is not limited to the DU 28 or CU 26. The control unit 34 may also be located at another node such as within the macro radio unit 16 or even a radio unit 22. The control unit 34 controls the power consumption of a radio unit 22 by sending an instruction to the radio unit 22 to power down its transmitter over a period of time when communications activity falls below a threshold, when resource usage of the radio unit 22 falls below a threshold or when a number of wireless devices attached to the radio unit 22 falls below a certain predetermined number, for example.

The control unit 34 includes processing circuitry 36 which may be application specific integrated circuitry (ASIC) or may be a processor 38 and memory 40, where the processor 38 operates according to executable instructions 42 stored in the memory 40. The processing circuitry 36 may be configured to obtain cell load information via a cell load information collector 44 from each of a plurality of radio units serving a plurality of cells in a cell cluster 30. Based on the cell load information, which may include physical resource blocks (PRBs) allocated by a radio unit serving a cell to wireless devices in the cell, the processing circuitry 36 may be configured to determine via a lowest resource usage detector 46 a first radio unit from the plurality of radio units having a lowest resource usage. A power control unit 48 of the processing circuitry 36 may instruct the first radio unit having the lowest resource usage from the plurality of radio units to power down a transmitter of the first radio unit over a period of time to cause handoff of wireless devices in a first cell served by the first radio unit 22a to a second cell served by a second radio unit 22c.

One reason for powering down over a period of time is to facilitate a smooth handoff without dropped calls. Thus, in some embodiments, the transmitter of the radio unit is powered down incrementally over the period of time according to steps 20 as shown in FIG. 2.

Optionally, the processing circuitry 36 may generate an instruction to one or more nearby radio units, such as radio unit 22c to increase downlink power in response to the handoff of the wireless device from the first cell to the second cell. The power of the second radio unit may be increased incrementally according to steps 18 as shown in FIG. 2, as the transmitter of the first radio unit is being powered down. In some embodiments, the power increase is performed incrementally according to non-uniform steps. In some embodiments, the power is increased by increasing an average transmit power of at least one of a resource element and a subcarrier.

When the transmitter of the first radio unit 22a is powered down, the receiver of the first radio unit may be instructed by the control unit 34 to listen to the wireless devices in its cell that have been handed over to a nearby cell. In one example implementation, the listening includes decoding information in the uplink signals. In another variant, the decoding is based on an uplink configuration of the adjacent cell. In another variant, the uplink signals are carried by at least one of a physical random access channel, synchronization reference signals and a physical uplink shared channel.

When a demand for resources of the first radio unit 22a exceeds a second predetermined threshold, the power control unit 48 of the control unit 34 issues an instruction to the first radio unit 22a causing the first radio unit 22a to power up its transmitter. The transmitter of the first radio unit 22a may power up incrementally. In particular, the power at which reference symbols are transmitted by the first radio unit 22a may be increased incrementally.

Note that the transmitters of more than one radio unit 22 may be powered down at a time. Thus, when a load on a third radio base station 22b falls below a third predetermined threshold, the transmitter of the third radio base station 22b may be powered down over a period of time by the control unit 34 to allow time for handoff of wireless devices in the cell served by the third radio base station 22b to a nearby cell such as the second cell. The third radio base station 22b may be instructed by the power control unit 48 to listen to the uplink signals of the wireless devices in the third cell served by the third radio base station 22b.

The control unit 34 may combine uplink signals received from the first, second and third radio units 22a-c coherently in a coordinated multipoint (CoMP) process to obtain a macro diversity advantage at the first radio unit 22a and/or the third radio unit 22b. The control unit 34 may also instruct a radio unit receiver to operate in a "sniffing" mode to monitor for UL traffic without putting the receiver into a fully operational mode.

FIG. 7 is a block diagram of an alternative embodiment of a control unit 34 that may be implemented by a set of software modules executed by a processor. The control unit 34 includes a memory module 52 configured to store load thresholds and executable software. A resource monitoring module 54 is configured to obtain cell loading information from a plurality of radio units serving cells in a cluster 30. From the loading information, the resource monitoring module 54 determines a first radio of the plurality of radios having a lowest resource usage or a resource usage that falls below a first predetermined threshold. A power control module 56 is configured to instruct the first radio to power down its transmitter over time to cause a handoff of wireless devices in a first cell served by the first radio unit to a second cell served by a second radio unit without dropping calls.

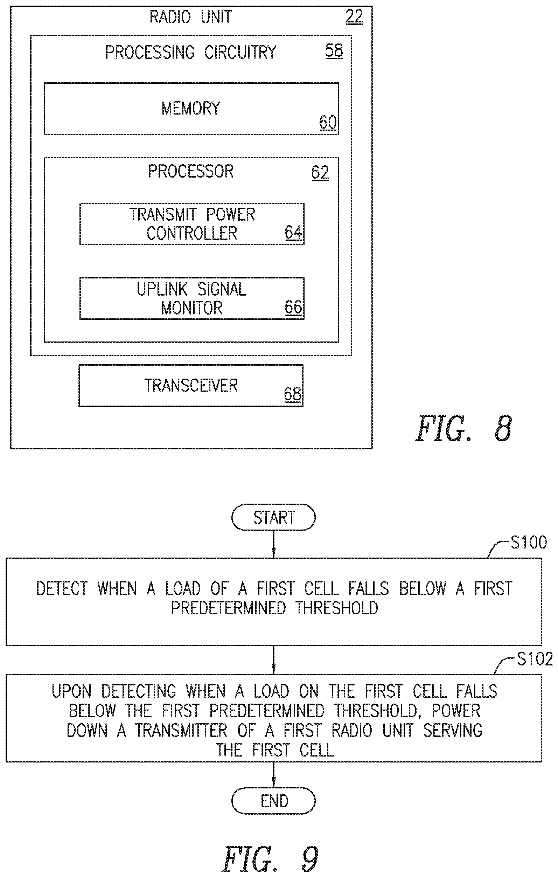

FIG. 8 is a block diagram of a radio unit 22 configured to respond to instructions from a control unit such as control unit 34 to power down and power up over time. The radio unit 22 includes processing circuitry 58 that may include a memory 60 and a processor 62. The memory 60 is configured to store executable instructions executable by the processor 62. The processor 62 may control via a transmit power controller 64 transmit power of a transceiver 68 of the radio unit 22. Thus, the transmit power controller 64 may power down a transmitter of the transceiver 68 over time in response to a power down instruction from the control unit 34. The powering down of the transmitter may be done incrementally to enable a smooth handoff of wireless devices without dropping calls. The processor 62 may cause via an uplink signal monitor 66 a receiver of the transceiver 68 to receive uplink signals from wireless devices in a cell served by the radio unit 22. The uplink signal monitor 66 monitors the uplink signals to determine if activity increases and exceeds a threshold. In some example implementations, the activity is compared to a threshold in the radio unit 22, whereas in other example implementations, the activity is compared to a threshold in the control unit 34. In either case, when the activity exceeds the threshold, the transmitter of the transceiver 68 may be instructed to power up over time.

FIG. 9 is a flowchart of an exemplary process for power conservation in a cluster of cells 30. The process includes detecting when a load of a first cell, e.g., cell 1-1, in the cluster 30 falls below a first predetermined threshold (block S100). In one embodiment, the load is based at least in part on a number of wireless devices in communication with a first radio unit 22a serving the first cell. Upon detecting when the load on the first cell 1-1 falls below the first predetermined threshold, a transmitter of the radio unit 22a serving the first cell 1-1 is powered down over a period of time to allow time for handoff of wireless devices in the first cell to a second radio unit serving an adjacent cell (block S102).

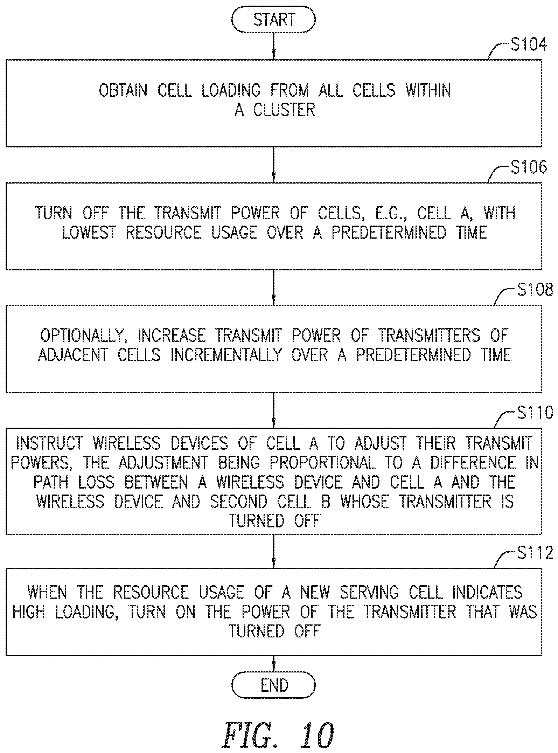

FIG. 10 is a more detailed flowchart of an exemplary process for conserving power in a cluster of cells 30. The process includes obtaining cell loading information from all cells within the cluster 30 (block S104). The process also includes turning off the transmit power of cells with lowest resource usage incrementally over a predetermined time (block S106). Optionally, the transmit power of transmitters of radio units 22 serving adjacent cells may be increased over time to improve reception by wireless devices in the deactivated cells (block S108). In some variants, wireless devices 32 of deactivated cells may be instructed to adjust their transmit powers in proportion to a difference in a path loss between a wireless device and a first cell and the wireless device and a second cell whose transmitter is turned off (block S110). When the resource usage of an active serving cell indicates high loading, the power of the transmitter of the radio unit 22a serving the deactivated cell is turned on (block S112).

Thus, in some embodiments, cell circuitry of underutilized cells in a cluster can be operated at lower power or turned off to save the power consumption of the network and further reduce the unnecessary interference caused by the transmission of various reference signals from these under-utilized cells. Thus, methods include adaptively turning off and turning on the cells within a cluster to improve the network efficiency and battery power saving at the connected wireless devices.

Embodiments can be realized in hardware, or a combination of hardware and software. Any kind of computing system, or other apparatus adapted for carrying out the methods described herein, is suited to perform the functions described herein. A typical combination of hardware and software could be a specialized computer system, having one or more processing elements and a computer program stored on a storage medium that, when loaded and executed, controls the computer system such that it carries out the methods described herein. The arrangements described herein can also be embedded in a computer program product, which comprises all the features enabling the implementation of the methods described herein, and which, when loaded in a computing system is able to carry out these methods. Storage medium refers to any volatile or non-volatile storage device.

Computer program or application in the present context means any expression, in any language, code or notation, of a set of instructions intended to cause a system having an information processing capability to perform a particular function either directly or after either or both of the following a) conversion to another language, code or notation; b) reproduction in a different material form.

It will be appreciated by persons skilled in the art that embodiments are not limited to what has been particularly shown and described herein above. In addition, unless mention was made above to the contrary, it should be noted that all of the accompanying drawings are not to scale. A variety of modifications and variations are possible in light of the above teachings without departing from the scope of the disclosure, which is limited only by the following claims.

## Claims

1. A method for adaptively powering down cells within a cluster, the method including:

   detecting when a load on a first cell falls below a first predetermined threshold, the load being based at least in part on a number of wireless devices (32) in communication with a first radio unit (22a) serving the first cell (S100);
   upon detecting that the load on the first cell falls below the first predetermined threshold, powering down a transmitter of the first radio unit (22a) over a period of time to allow time for handoff of wireless devices (32) in the first cell to a second radio unit (22c) serving an adjacent cell (S102); and
   increasing a power of the second radio unit (22c) serving the adjacent cell in response to the handoff of the wireless devices (32) from the first cell.

2. The method of Claim 1, wherein the powering down of the transmitter of the first radio unit (22a) is performed incrementally over the period of time.

3. The method of Claim 1, wherein the increasing of the power is performed incrementally as the transmitter of the first radio unit (22a) is being powered down.

4. The method of Claim 3, wherein the power increase is performed incrementally according to non-uniform steps.

5. The method of Claim 3, wherein the power is increased by increasing an average transmit power of at least one of a resource element and a subcarrier.

6. A control unit configured to control power consumption of a plurality of radio units each serving a corresponding, respective cell, the control unit (34) including:
   processing circuitry (36), the processing circuitry (36) configured to:

   obtain cell loading information (44) from the plurality of radio units;
   determine, based on the obtained cell loading information (44), a first radio unit (22a) from the plurality of radio units having a lowest resource usage (46); and
   instruct the first radio unit (22a) having the lowest resource usage from the plurality of radio units to power down a transmitter of the first radio unit (22a) over a period of time to enable handoff of wireless devices (32) in a first cell served by the first radio unit (22a) to a second cell served by a second radio unit (22c),
   wherein the processing circuitry (36) is further configured to send an instruction to the second radio unit (22c) serving the second cell to increase a transmit power in response to the handoff of the wireless device (32) from the first cell.

7. The control unit of Claim 6, wherein the powering down of the transmitter of the first radio unit (22a) is performed incrementally over the period of time.

8. The control unit of Claim 6, wherein the processing circuitry (36) is further configured to increase the transmit power of the second radio unit (22c) incrementally as the first radio unit (22a) is powered down.

9. The control unit of Claim 8, wherein the power increase is performed incrementally according to non-uniform steps.

10. The control unit of Claim 8, wherein the power is increased by increasing an average transmit power of at least one of a resource element and a subcarrier.

11. A system comprising:

    a first radio unit serving a first cell and a second radio unit serving a second cell, the first cell adjacent to the second cell, the first radio unit (22) comprising a first transmitter (68) and first processing circuitry (58), the second radio unit comprising a second transmitter and second processing circuitry; and
    a control unit configured to control power consumption of the first and second radio units, the control unit including processing circuitry (36) configured to obtain cell loading information from the first and second radio units and to detect, based on the cell loading information, when a load on the first cell falls below a first predetermined threshold, the load being based at least in part on a number of wireless devices (32) in communication with the first radio unit serving the first cell;
    the system configured to:

    receive, by the first processing circuitry (58) of the first radio unit, a first instruction from the control unit to power down the first transmitter when the load on the first cell falls below the first predetermined threshold;
    power down, using the first processing circuitry (58) of the first radio unit, the first transmitter (68) over a period of time to cause handoff of wireless devices (32) in the first cell to the second radio unit serving the second cell, upon receiving the first instruction;
    receive, by the second radio unit serving the second cell, a second instruction from the control unit to increase a transmit power in response to the handoff of the wireless devices from the first cell; and
    increase the transmit power of the second radio unit serving the second cell upon receiving the second instruction.

12. The system of Claim 11, wherein the first processing circuitry (58) is configured to power down the first transmitter (68) incrementally over the period of time.

13. The system of Claim 12, wherein the first processing circuitry (58) is further configured to:

    receive a third instruction to power up the first transmitter (68); and
    power up the first transmitter (68).

14. The system of Claim 13, wherein powering up the first transmitter (68) includes incrementally increasing the power at which reference symbols are transmitted.

**Patentansprüche**

1. Verfahren zum adaptiven Ausschalten von Zellen innerhalb eines Clusters, wobei das Verfahren umfasst:

   Erkennen, wenn eine Belastung einer ersten Zelle unter eine erste vorbestimmte Schwelle fällt, wobei die Belastung wenigsten zum Teil auf einer Anzahl von drahtlosen Vorrichtungen (32) in Kommunikation mit einer ersten Funkeinheit (22a) basiert, welche die erste Zelle versorgt (S100);
   Ausschalten bei Erkennen, dass die Belastung der ersten Zelle unter die erste vorbestimmte Schwelle fällt, eines Senders der ersten Funkeinheit (22a) über eine Zeitdauer, um Zeit zur Weitergabe von drahtlosen Vorrichtungen (32) in der ersten Zelle an eine zweite Funkeinheit (22c) zu gewähren, die eine benachbarte Zelle versorgt (S102); und
   Erhöhen einer Leistung der zweiten Funkeinheit (22c), welche die benachbarte Zelle versorgt, in Reaktion auf die Weitergabe der drahtlosen Vorrichtungen (32) aus der ersten Zelle.

2. Verfahren nach Anspruch 1, wobei das Ausschalten des Senders der ersten Funkeinheit (22a) über die Zeitdauer schrittweise durchgeführt wird.

3. Verfahren nach Anspruch 1, wobei das Erhöhen der Leistung schrittweise durchgeführt wird, während der Sender der ersten Funkeinheit (22a) ausgeschaltet wird.

4. Verfahren nach Anspruch 3, wobei die Leistungserhöhung schrittweise gemäß uneinheitlichen Schritten durchgeführt wird.

5. Verfahren nach Anspruch 3, wobei die Leistung durch Erhöhen einer mittleren Sendeleistung mindestens eines von einem Ressourcenelement und einem Unterträger erhöht wird.

6. Steuereinheit, die zum Steuern des Leistungsverbrauchs einer Mehrzahl von Funkeinheiten konfiguriert ist, die jeweils eine jeweilige entsprechende Zelle versorgen, wobei die Steuereinheit (34) umfasst:
   eine Verarbeitungsschaltungsanordnung (36), wobei die Verarbeitungsschaltungsanordnung (36) konfiguriert ist zum:

   Einholen von Zellbelastungsinformationen (44) von der Mehrzahl von Funkeinheiten;
   Bestimmen basierend auf den eingeholten Zellbelastungsinformationen (44) einer ersten Funkeinheit (22a) aus der Mehrzahl von Funkeinheiten mit einer geringsten Ressourcennutzung (46); und
   Anweisen der ersten Funkeinheit (22a) mit der geringsten Ressourcennutzung aus der Mehrzahl von Funkeinheiten, einen Sender der ersten Funkeinheit (22a) über eine Zeitdauer auszuschalten, um Weitergabe von drahtlosen Vorrichtungen (32) in der ersten Zelle, die von der ersten Funkeinheit (22a) versorgt wird, an eine zweite Zelle zu ermöglichen, die von einer zweiten Funkeinheit (22c) versorgt wird,
   wobei die Verarbeitungsschaltungsanordnung (36) ferner so konfiguriert ist, dass sie in Reaktion auf die Weitergabe der drahtlosen Vorrichtung (32) aus der ersten Zelle eine Anweisung zum Erhöhen einer Sendeleistung an die zweite Steuereinheit (22c) sendet, welche die zweite Zelle versorgt.

7. Steuereinheit nach Anspruch 6, wobei das Ausschalten des Senders der ersten Funkeinheit (22a) über die Zeitdauer schrittweise durchgeführt wird.

8. Steuereinheit nach Anspruch 6, wobei die Verarbeitungsschaltungseinheit (36) ferner so konfiguriert ist, dass sie die Sendeleistung der zweiten Funkeinheit (22c) schrittweise erhöht, während die erste Funkeinheit (22a) ausgeschaltet wird.

9. Steuereinheit nach Anspruch 8, wobei die Leistungserhöhung schrittweise gemäß uneinheitlichen Schritten durchgeführt wird.

10. Steuereinheit nach Anspruch 8, wobei die Leistung durch Erhöhen einer mittleren Sendeleistung mindestens eines von einem Ressourcenelement und einem Unterträger erhöht wird.

11. System, umfassend:

    eine erste Funkeinheit, die eine erste Zelle versorgt, und eine zweite Zelle, die eine zweite Zelle versorgt, wobei

EP 3 326 411 B1

die erste Zelle benachbart zur zweiten Zelle ist, die erste Funkeinheit (22) einen ersten Sender (68) und eine erste Verarbeitungsschaltungsanordnung (58) umfasst, und die zweite Funkeinheit einen zweiten Sender und eine zweite Verarbeitungsschaltungsanordnung umfasst; und

eine Steuereinheit, die zum Steuern des Leistungsverbrauchs der ersten und der zweiten Funkeinheit konfiguriert ist, wobei die Steuereinheit eine Verarbeitungsschaltungsanordnung (36) umfasst, die so konfiguriert ist, dass sie Zellbelastungsinformationen von der ersten und der zweiten Funkeinheit einholt und basierend auf den Zellbelastungsinformationen erkennt, wenn ein Belastung der ersten Zelle unter eine erste vorbestimmte Schwelle fällt, wobei die Belastung wenigstens zum Teil auf einer Anzahl von drahtlosen Vorrichtungen (32) in Kommunikation mit der ersten Funkeinheit basiert, welche die erste Zelle versorgt;

wobei das System konfiguriert ist zum:

Empfangen einer ersten Anweisung durch die erste Verarbeitungsschaltungsanordnung (58) der ersten Funkeinheit von der Steuereinheit zum Ausschalten des ersten Senders, wenn die Belastung der ersten Zelle unter die erste vorbestimmte Schwelle fällt;

Ausschalten des ersten Senders (68) bei Empfang der ersten Anweisung unter Verwendung der ersten Verarbeitungsschaltungsanordnung (58) der ersten Funkeinheit über eine Zeitdauer, um Weitergabe von drahtlosen Vorrichtungen (32) in der ersten Zelle an die zweite Funkeinheit zu bewirken, welche die zweite Zelle versorgt; und

Empfangen einer zweiten Anweisung durch die zweite Funkeinheit, welche die zweite Zelle versorgt, von der Steuereinheit zum Erhöhen der Sendeleistung in Reaktion auf die Weitergabe der drahtlosen Vorrichtungen aus der ersten Zelle; und

Erhöhen der Sendeleistung der zweiten Funkeinheit, welche die zweite Zelle versorgt, bei Empfang der zweiten Anweisung.

12. System nach Anspruch 11, wobei die erste Verarbeitungsschaltungsanordnung (58) so konfiguriert ist, dass sie den ersten Sender (68) über die Zeitdauer schrittweise ausgeschaltet.

13. Vorrichtung nach Anspruch 12, wobei die erste Verarbeitungsschaltungsanordnung (58) ferner konfiguriert ist zum:

Empfangen einer dritten Anweisung zum Einschalten des ersten Senders (68); und
Einschalten des ersten Senders (68).

14. System nach Anspruch 13, wobei das Einschalten des ersten Senders (68) ein schrittweises Erhöhen der Leistung, bei welcher Referenzsymbole gesendet werden, umfasst.

**Revendications**

1. Procédé de réduction de puissance adaptative de cellules à l'intérieur d'une grappe, le procédé incluant :

la détection du moment auquel une charge dans une première cellule devient inférieure à un premier seuil prédéterminé, la charge étant basée au moins en partie sur un nombre de dispositifs sans fil (32) en communication avec une première unité radio (22a) desservant la première cellule (S100) ;
à la détection que la charge dans la première cellule devient inférieure au premier seuil prédéterminé, la réduction de puissance d'un émetteur de la première unité radio (22a) au cours d'une période de temps pour laisser le temps au transfert de dispositifs sans fil (32) dans la première cellule à une deuxième unité radio (22c) desservant une cellule adjacente (S102) ; et
l'augmentation d'une puissance de la deuxième unité radio (22c) desservant la cellule adjacente en réponse au transfert des dispositifs sans fil (32) depuis la première cellule.

2. Procédé selon la revendication 1, dans lequel la réduction de puissance de l'émetteur de la première unité radio (22a) est effectuée progressivement au cours de la période de temps.

3. Procédé selon la revendication 1, dans lequel l'augmentation de la puissance est effectuée progressivement au fur et à mesure de la réduction de puissance de l'émetteur de la première unité radio (22a) .

4. Procédé selon la revendication 3, dans lequel l'augmentation de puissance est effectuée progressivement par paliers non uniformes.

**5.** Procédé selon la revendication 3, dans lequel la puissance est augmentée par l'augmentation d'une puissance de transmission moyenne d'au moins l'un d'un élément de ressource et d'une sous-porteuse.

**6.** Unité de commande configurée pour commander une consommation de puissance d'une pluralité d'unités radio, chacune d'elles desservant une cellule respective correspondante, l'unité de commande (34) incluant : une circuiterie de traitement (36), la circuiterie de traitement (36) étant configurée pour :

l'obtention d'informations de chargement de cellule (44) auprès de la pluralité d'unités radio ; la détermination, sur la base des informations de chargement de cellule (44) obtenues, d'une première unité radio (22a) parmi la pluralité d'unités radio ayant la plus basse utilisation de ressources (46) ; et l'instruction, à la première unité radio (22a) ayant la plus basse utilisation de ressources parmi la pluralité d'unités radio, de réduire la puissance d'un émetteur de la première unité radio (22a) au cours d'une période de temps pour permettre un transfert de dispositifs sans fil (32) dans une première cellule desservie par la première unité radio (22a) vers une deuxième cellule desservie par une deuxième unité radio (22c), dans laquelle la circuiterie de traitement (36) est en outre configurée pour envoyer une instruction, à la deuxième unité radio (22c) desservant la deuxième cellule, d'augmenter une puissance de transmission en réponse au transfert du dispositif sans fil (32) depuis la première cellule.

**7.** Unité de commande selon la revendication 6, dans laquelle la réduction de puissance de l'émetteur de la première unité radio (22a) est effectuée progressivement au cours de la période de temps.

**8.** Unité de commande selon la revendication 6, dans laquelle la circuiterie de traitement (36) est en outre configurée pour augmenter la puissance de transmission de la deuxième unité radio (22c) progressivement au fur et à mesure de la réduction de puissance de la première unité radio (22a).

**9.** Unité de commande selon la revendication 8, dans laquelle l'augmentation de puissance est effectuée progressivement par paliers non uniformes.

**10.** Unité de commande selon la revendication 8, dans laquelle la puissance est augmentée par l'augmentation d'une puissance de transmission moyenne d'au moins l'un d'un élément de ressource et d'une sous-porteuse.

**11.** Système comprenant :

une première unité radio desservant une première cellule et une deuxième unité radio desservant une deuxième cellule, la première cellule étant adjacente à la deuxième cellule, la première unité radio (22) comprenant un premier émetteur (68) et une première circuiterie de traitement (58), la deuxième unité radio comprenant un deuxième émetteur et une deuxième circuiterie de traitement ; et une unité de commande configurée pour commander une consommation de puissance des première et deuxième unités radio, l'unité de commande incluant une circuiterie de traitement (36) configurée pour l'obtention d'informations de chargement de cellule auprès des première et deuxième unités radio et la détection, sur la base des informations de chargement de cellule, du moment auquel une charge dans la première cellule devient inférieure à un premier seuil prédéterminé, la charge étant basée au moins en partie sur un nombre de dispositifs sans fil (32) en communication avec la première unité radio desservant la première cellule ; le système étant configuré pour :

la réception, par la première circuiterie de traitement (58) de la première unité radio, d'une première instruction, en provenance de l'unité de commande, de réduire la puissance du premier émetteur lorsque la charge dans la première cellule devient inférieure au premier seuil prédéterminé ; la réduction de la puissance, en utilisant la première circuiterie de traitement (58) de la première unité radio, du premier émetteur (68) au cours d'une période de temps afin de provoquer un transfert de dispositifs sans fil (32) dans la première cellule à la deuxième unité radio desservant la deuxième cellule, à la réception de la première instruction ; la réception, par la deuxième unité radio desservant la deuxième cellule, d'une deuxième instruction, en provenance de l'unité de commande, d'augmenter une puissance de transmission en réponse au transfert des dispositifs sans fil depuis la première cellule ; et l'augmentation de la puissance de transmission de la deuxième unité radio desservant la deuxième cellule à la réception de la deuxième instruction.

**EP 3 326 411 B1**

12. Système selon la revendication 11, dans lequel la première circuiterie de traitement (58) est configurée pour réduire la puissance du premier émetteur (68) progressivement au cours de la période de temps.

13. Système selon la revendication 12, dans lequel la première circuiterie de traitement (58) est en outre configurée pour :

   la réception d'une troisième instruction pour augmenter la puissance du premier émetteur (68) ; et
   l'augmentation de la puissance du premier émetteur (68) .

14. Système selon la revendication 13, dans lequel l'augmentation de la puissance du premier émetteur (68) inclut l'augmentation progressive de la puissance à laquelle des symboles de référence sont transmis.

**14**

(Prior Art)
*FIG. 1*

FIG. 2

FIG. 3

FIG. 4

FIG. 5

FIG. 6

FIG. 7

RADIO UNIT     <u>22</u>

PROCESSING CIRCUITRY     <u>58</u>

MEMORY

<u>60</u>

PROCESSOR     <u>62</u>

TRANSMIT POWER
CONTROLLER     <u>64</u>

UPLINK SIGNAL
MONITOR     <u>66</u>

TRANSCEIVER     <u>68</u>

*FIG. 8*

START

DETECT WHEN A LOAD OF A FIRST CELL FALLS BELOW A FIRST
PREDETERMINED THRESHOLD

S100

UPON DETECTING WHEN A LOAD ON THE FIRST CELL FALLS
BELOW THE FIRST PREDETERMINED THRESHOLD, POWER
DOWN A TRANSMITTER OF A FIRST RADIO UNIT SERVING
THE FIRST CELL

S102

END

*FIG. 9*

```
                        ┌─────────┐
                        │  START  │
                        └─────────┘
                             │                              ┌─S104
         ┌───────────────────┼──────────────────────────────────┐
         │         OBTAIN CELL LOADING FROM ALL CELLS WITHIN      │
         │                     A CLUSTER                          │
         └───────────────────┬──────────────────────────────────┘
                             │                              ┌─S106
         ┌───────────────────┼──────────────────────────────────┐
         │    TURN OFF THE TRANSMIT POWER OF CELLS, E.G., CELL A, WITH    │
         │      LOWEST RESOURCE USAGE OVER A PREDETERMINED TIME   │
         └───────────────────┬──────────────────────────────────┘
                             │                              ┌─S108
         ┌───────────────────┼──────────────────────────────────┐
         │    OPTIONALLY, INCREASE TRANSMIT POWER OF TRANSMITTERS OF     │
         │    ADJACENT CELLS INCREMENTALLY OVER A PREDETERMINED TIME     │
         └───────────────────┬──────────────────────────────────┘
                             │                              ┌─S110
         ┌───────────────────┼──────────────────────────────────┐
         │  INSTRUCT WIRELESS DEVICES OF CELL A TO ADJUST THEIR TRANSMIT │
         │  POWERS, THE ADJUSTMENT BEING PROPORTIONAL TO A DIFFERENCE IN │
         │   PATH LOSS BETWEEN A WIRELESS DEVICE AND CELL A AND THE      │
         │    WIRELESS DEVICE AND SECOND CELL B WHOSE TRANSMITTER IS     │
         │                      TURNED OFF                        │
         └───────────────────┬──────────────────────────────────┘
                             │                              ┌─S112
         ┌───────────────────┼──────────────────────────────────┐
         │   WHEN THE RESOURCE USAGE OF A NEW SERVING CELL INDICATES     │
         │  HIGH LOADING, TURN ON THE POWER OF THE TRANSMITTER THAT WAS  │
         │                      TURNED OFF                        │
         └───────────────────┬──────────────────────────────────┘
                             │
                        ┌─────────┐
                        │   END   │
                        └─────────┘
```

*FIG. 10*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011100673 A1
- US 20150093996 A1

- WO 2013192356 A1